# EUROPÄISCHE PATENTSCHRIFT

(11) **EP 2 626 218 B1**
(45) Veröffentlichungstag und Bekanntmachung des Hinweises auf die Patenterteilung: **11.09.2019**
(21) Anmeldenummer: 12194493.8
(22) Anmeldetag: 27.11.2012
(51) Int. Cl.: B60B 5/02, B60B 21/02, B29C 53/56, B29C 70/52

(54) **Verfahren zum Herstellen einer Radfelge aus Faserverbundwerkstoff und Radfelge für ein Kraftfahrzeug**
Method for manufacturing a wheel rim from fibre composite material and wheel rim for a motor vehicle
Procédé de fabrication d'une jante à base de matière première composite en fibres et jante pour un véhicule automobile

(30) Priorität: 10.02.2012 DE 102012202048
(43) Veröffentlichungstag der Anmeldung: 14.08.2013
(73) Patentinhaber: Bayerische Motoren Werke Aktiengesellschaft, 80809 München (DE)
(72) Erfinder: Keller, David, 80638 München (DE)

(56) Entgegenhaltungen:
- WO-A1-2009/130525
- DE-A1-102010 006 805
- FR-A1- 2 962 688
- US-A- 4 483 729
- US-A1- 2006 138 855

## Beschreibung

Die Erfindung betrifft ein Verfahren zum Herstellen einer Radfelge, kurz auch als Felge bezeichnet, aus Faserverbundwerkstoff, nach dem Oberbegriff des ersten Anspruchs und eine durch ein solches Verfahren hergestellte Felge, insbesondere für Kraftfahrzeuge.

Es ist bereits bekannt, Räder aus Faserverbundwerkstoff herzustellen, indem verschiedene Radeinzelteile vorgefertigt werden und danach das Rad aus diesen zusammen gesetzt wird.

Die DE 41 23 459 C1 beschreibt ein solches gebautes Rad mit einer Felge aus Kunststoff und einer Radschüssel aus Metall. Beide sind form- / kraft- / oder materialschlüssig zusammen gefügt. Auf eine beanspruchungsgerechte Auslegung der Felge aus Kunststoff wird nicht eingegangen. Zur Gewichtsreduktion bei Rädern bietet sich der Felgenring besonders an. Es handelt sich um eine rotationssymmetrische Struktur, die hohe Lasten tragen soll. Kunststoffe bieten sich als Konstruktionswerkstoffe an. So können Faserverstärkte Felgenringe mit konventionellen Radsternen zu hybriden Rädern oder mit Kunststoffsternen zu Voll-CFK-Rädern kombiniert werden. Die Herstellung von Felgenringen durch Ablegen vieler einzelner, trockener oder vorimprägnierter Faserhalbzeugzuschnitte ist aufwändig und langsam und erfordert zusätzliche Qualitätssicherungsmaßnahmen.

Außerdem beschreibt die DE 41 29 733 A1 ein Harzrad, das aus Körnern hergestellt ist, welche durch das Schneiden von Stäben erhalten werden, die mittels Strangpressen aus kontinuierlichen Fasern und einem thermopastischen Harz geformt sind. Außerdem sind noch die Herstellungsverfahren Formpressen, Spritzgießen oder Spritzpressen und thermisches Schmelzen erwähnt.

Räder aus faserverstärkten Kunststoffen werden auf Grund ihres Leichtbaupotentials zunehmend interessant. Ein Einsatz in großem Umfang wird jedoch derzeit noch durch die hohen Material- und Fertigungskosten behindert. Die Fertigung von Bauteilen aus faserverstärkten Kunststoffen besteht in der Regel aus komplexen, manuellen Arbeitsschritten, wobei insbesondere drei Verfahren hohes Potential für eine Serienfertigung aufweisen. Hierbei handelt es sich um Pultrusion, Resin Transfer Moulding (RTM) und Pressen von Prepregs bzw. Thermoplasten.

Die Pultrusion wird üblicherweise für die Herstellung von Profilen eingesetzt. Es ist ein kontinuierliches Verfahren, dem Strangpressen am ähnlichsten, bei dem mit Harz getränkte Rovings oder Halbzeuge durch ein temperiertes Werkzeug gezogen und dabei ausgehärtet werden. Bereits heute werden in diesem Verfahren große Serien von beispielsweise Fensterrahmenprofilen produziert. Ursprünglich wurden bei diesem Verfahren nur Rovings für eine Verstärkung in Längsrichtung eingesetzt. Mit Verfahrensvarianten wie dem Pullwinding bzw. Pullbraiding oder dem Einziehen von textilem Halbzeug, wie beispielsweise Gewebe oder Gelege, können auch Bauteile mit multiaxialen Faserorientierungen hergestellt werden. Die Pultrusion kann nur Profile mit in Längsrichtung konstanten Querschnitten produzieren. Lokale Verstärkungen und Elemente, wie beispielsweise Inserts, können nur schwer oder gar nicht eingebracht werden. Auch sind die maximalen Abmessungen der heute herstellbaren Bauteile begrenzt. Insbesondere können Profile aus faserverstärktem Kunststoff, welche durch Pultrusion hergestellt werden, speziell quer zur Längsrichtung nur begrenzt Energie aufnehmen, da nach einer Belastung mit der maximalen Last meist ein schnelles Versagen der Profile eintritt. Dokument FR 2 962 688 A1 offenbart eine Fahrradfelge, hergestellt durch Pultrusion. Dokument DE 10 2010 006 805 A1 offenbart ein Verfahren zur Herstellung von Bauteilen durch Pultrusion, Pullwinding oder Pullbraiding.

Deshalb ist es Aufgabe der Erfindung, ein Verfahren zur Herstellung einer Felge aus Faserverbundwerkstoff und eine solche Felge bereitzustellen, wobei das Verfahren auf Basis der Pultrusion ermöglicht, eine Felge mit besseren mechanischen Festigkeitswerten beanspruchungsgerecht auszubilden.

Die Aufgabe wird mit den Verfahrensschritten des Anspruchs 1 gelöst. Weitere Verfahren und Ausgestaltungen der Erfindung ergeben sich aus den Merkmalen der Unteransprüche.

Nach der Erfindung ist ein Verfahren zur Herstellung einer Felge aus Faserverbundwerkstoff mittels eines kontinuierlich fortschreitenden Fertigungsverfahrens, der Pultrusion, wobei gleichzeitig oder zeitversetzt wenigstens ein weiteres Fertigungsverfahren, Pullbraiding beziehungsweise Pullwinding, zur Anwendung kommt, dadurch gekennzeichnet, dass die Felge zweischichtig hergestellt ist, ein erster innerer Kern entsteht durch Pultrusion und eine zweite äußere Schicht aus Fasergewebe, um den Kern herum gewickelt oder geflochten, entsteht durch Pullwinding beziehungsweise Pullbraiding.

Eine solche Kombination der bekannten Fertigungsverfahren ermöglicht es, eine Felge aus Faserverbundwerkstoff schichtweise aufzubauen. Der durch Pultrusion erzeugte Kern der Felge, aus in Umfangsrichtung ausgerichteten Langfasersträngen, ist umwickelt beziehungsweise umflochten von Langfasergewebe mit Fasern in Winkellagen zur Querverstärkung. Die Umwickelung beziehungsweise die Umflechtung wird erzeugt durch Pullwinding beziehungsweise Pullbraiding. Durch diesen Aufbau der Faserorientierung werden bessere mechanische Festigkeitswerte erreicht. Dadurch kann das Gewicht aufgrund geringeren Materialbedarfs vorteilhafterweise weiter reduziert werden. Auch die Verwendung pultrudierter Kernprofile als Flechtkerne auf einer herkömmlichen Flechtanlage ist möglich. Die Umflechtung kann entlang des Umfangs oder
axial zum Felgenring erfolgen. Dabei ist es weiter vorteilhaft, wenn ein Fügestoss bei thermoplastischer Matrix verschweißt wird. Außerdem kann dann vorteilhafterweise ein zweiter Fügestoss in einer Umwicklung oder Umflechtung aus Fasergewebe zu einem ersten Fügestoss im Kern versetzt angeordnet werden, was die Festigkeit des Fügestosses ebenfalls erhöht.

Eine Felge, hergestellt nach einem der vorstehenden Verfahren, bestehend aus Langfasersträngen, die eingebettet in eine Matrix aus duroplastischem oder thermoplastischem Polymerwerkstoff sind, hat den Vorteil, dass je nach Festigkeitsanforderungen beziehungsweise Gewichtsvorstellungen Langfaserstränge aus Aramid- und/oder Carbon- und/oder Glasfasern verwendet werden können.

Ein bevorzugtes Ausführungsbeispiel der Erfindung beschreibt die nachfolgende Beschreibung mit der zugehörigen Zeichnung. Es zeigen in skizzenartigen räumlichen Teilansichten:
- Figur 1:: einen Querschnitt durch eine Felge gemäß der Erfindung und
- Figur 2:: einen erfindungsgemäßen Fügestoss der Felge aus Figur 1.

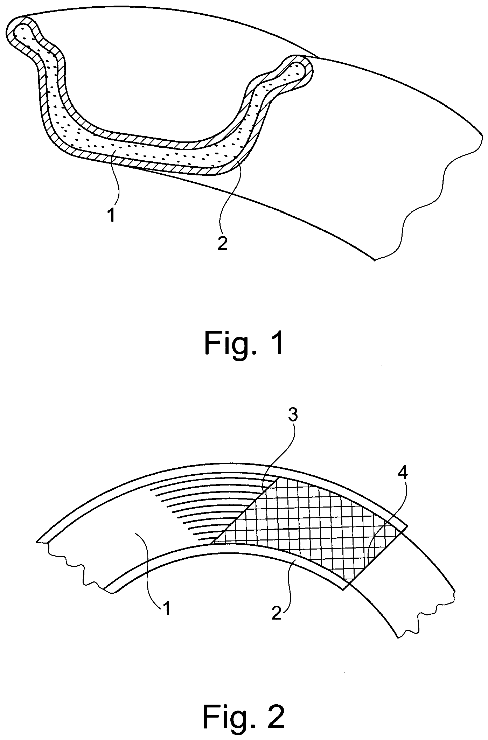

Figur 1 zeigt eine Felge aus Faserverbundwerkstoff, mit Langfasern aus Carbon, deren Kern 1 mittels eines kontinuierlich fortschreitenden Fertigungsverfahrens, der Pultrusion, hergestellt ist. Pultrusion (Faserziehen) ist ein Herstellverfahren für langfaserverstärkte Kunststoffbauteile. Dabei wird analog zum Strangpressen ein imprägniertes, textiles Halbzeug durch eine Matrix gezogen und dadurch konsolidiert. Es lassen sich mit diesem Verfahren sehr wirtschaftlich Profile mit konstantem Querschnitt und gleichbleibender Qualität herstellen. Die Profile können eine gerade Auszugsrichtung oder eine konstante Krümmung, wie bei der Felge, aufweisen. Die Fasern sind dabei ausschließlich in Auszugsrichtung, das heißt Felgenumfangsrichtung, orientiert. Nachgeschaltet kommt ein weiteres Fertigungsverfahren, nämlich Pullwinding, zur Anwendung, bei dem der pultrudierte Kern 1 mit einem Fasergewebe 2 aus Langfasersträngen umwickelt wird, das so orientiert ist, dass sich eine Ausrichtung der Langfaserstränge in zwei weitere Richtungen ungleich der Umfangsrichtung ergibt. Die Felge ist so zweischichtig hergestellt, der erste innere Kern 1 durch Pultrusion und die zweite äußere Schicht aus Fasergewebe 2, um den Kern 1 herum gewickelt, durch Pullwinding. Ein solcher gewichtsoptimaler Felgenring aus anisotropem Faserverbund enthält vorteilhafterweise beträchtliche Anteile Faserverstärkung in Umfangsrichtung. Die Querverstärkungen und Winkellagen der zweiten äußeren Schicht aus Fasergewebe 2 nehmen Kräfte infolge Schlaglochdurchfahrt (Reifeninnendruck) und Querkraftübertragung auf.

Konstruktiv ist mindestens ein Fügestoss zu fertigen, da keine geschlossenen Ringe pultrudiert werden können. Bei thermoplastischer Matrix wird der Fügestoss verschweißt. Ein erster Fügestoss 3 des Kerns 1 wird zu einem zweiten Fügestoss 4 des Fasergewebes 2 der Umwicklung versetzt angeordnet.

## Patentansprüche

1. Verfahren zur Herstellung einer Felge aus Faserverbundwerkstoff mittels eines kontinuierlich fortschreitenden Fertigungsverfahrens, der Pultrusion, wobei gleichzeitig oder zeitversetzt wenigstens ein weiteres der Fertigungsverfahren Pullbraiding beziehungsweise Pullwinding zur Anwendung kommt, **dadurch gekennzeichnet, dass** die Felge zweischichtig hergestellt ist, ein erster innerer Kern (1) durch Pultrusion und eine zweite äußere Schicht aus Fasergewebe (2), um den Kern (1) herum gewickelt oder geflochten, durch Pullwinding beziehungsweise Pullbraiding.

2. Verfahren nach Anspruch 1, **dadurch gekennzeichnet, dass** ein Fügestoss (3, 4) bei thermoplastischer Matrix verschweißt wird.

3. Verfahren nach Anspruch 2, **dadurch gekennzeichnet, dass** ein zweiter Fügestoss (4) in einer Umwicklung oder Umflechtung aus Fasergewebe (2) zum einem ersten Fügestoss (3) im Kern (1) versetzt angeordnet ist.

4. Felge, hergestellt nach einem Verfahren der Ansprüche 1 bis 3, **dadurch gekennzeichnet, dass** diese aus Langfasersträngen besteht, eingebettet in eine Matrix aus duroplastischem oder thermoplastischem Polymerwerkstoff.

5. Felge nach Anspruch 4, **dadurch gekennzeichnet, dass** die Langfaserstränge aus Aramid- und/oder Carbon- und/oder Glasfasern bestehen.

## Claims

1. A method for producing a wheel rim from fibre composite material by means of a continuous progressive manufacturing process, pultrusion, wherein at least one further of the manufacturing processes constituted by pullbraiding and pullwinding is used at the same time or with a temporal offset, **characterised in that** the wheel rim is produced in two layers: a first inner core (1) by pultrusion and a second outer layer formed from fibrous woven fabric (2), wound or braided around the core (1), by pullwinding or pullbrading respectively.

2. A method according to claim 1, **characterised in that** a junction (3, 4) is welded in the case of a thermoplastic matrix.

3. A method according to claim 2, **characterised in that** a second junction (4) is arranged in a wrapping or braiding formed from fibrous woven fabric (2), in a manner offset in relation to a first junction (3) in the core (1).

4. A wheel rim, produced by a method according to claims 1 to 3, **characterised in that** the wheel rim comprises long fibre strands embedded in a matrix made of thermosetting or thermoplastic polymer material.

5. A wheel rim according to claim 4, **characterised in that** the long fibre strands are made of a ramid and/or carbon and/or glass fibres.

## Revendications

1. Procédé d'obtention d'une jante en un matériau composite renforcé par des fibres, par un procédé de fabrication progressant en continu, à savoir la pultrusion, selon lequel simultanément ou de façon décalée dans le temps, on utilise au moins un autre procédé de fabrication, constitué par le tressage par traction ou l'enroulage par traction,
**caractérisé en ce que**
la jante est fabriquée en deux couches, à savoir un premier noyau interne (1) par pultrusion et une seconde couche externe en un tissu de fibres (2) enroulée ou tressée autour du noyau (1) par enroulage par traction ou par tressage par traction.

2. Procédé conforme à la revendication 1,
**caractérisé en ce qu'**
une jointure (3, 4) est soudée dans une matrice thermoplastique.

3. Procédé conforme à la revendication 2,
**caractérisé en ce qu'**
une seconde jointure (4) dans un enroulage ou un tricotage en un tissu de fibres (2) est décalée par rapport à la première jointure (3) dans le noyau (1).

4. Jante obtenue par la mise en oeuvre d'un procédé conforme à l'une des revendications 1 à 3,
**caractérisée en ce qu'**
elle est constituée de brins de fibres longitudinales noyés dans une matrice en un matériau polymère thermodurcissable ou thermoplastique.

5. Jante conforme à la revendication 4,
**caractérisée en ce que**
les brins de fibres longitudinales sont constitués par des fibres d'aramide et/ou par des fibres de carbone et/ou par des fibres de verre.
